# EUROPÄISCHE PATENTSCHRIFT

(11) **EP 2 059 428 B1**
(45) Veröffentlichungstag und Bekanntmachung des Hinweises auf die Patenterteilung: **09.06.2010**
(21) Anmeldenummer: 07765067.9
(22) Anmeldetag: 05.07.2007
(51) Int. Cl.: B60T 15/04, B60T 17/18

(54) **PNEUMATISCHE FAHRZEUGBREMSANLAGE SOWIE VERFAHREN ZUM STEUERN EINER DERARTIGEN BREMSANLAGE**
PNEUMATIC VEHICLE BRAKE SYSTEM AND METHOD FOR CONTROLLING A BRAKE SYSTEM OF SAID TYPE
SYSTÈME DE FREINAGE PNEUMATIQUE DE VÉHICULE, AINSI QUE PROCÉDÉ DE COMMANDE D'UN TEL SYSTÈME DE FREINAGE

(30) Priorität: 31.08.2006 DE 102006041008
(43) Veröffentlichungstag der Anmeldung: 20.05.2009
(73) Patentinhaber: WABCO GmbH, 30453 Hannover (DE)
(72) Erfinder: BENSCH, Uwe, 30161 Hannover (DE); HELMER, Jörg, Vogt 88267 (DE); KIEL Bernd-Joachim, 31515 Wunstorf (DE); ROSENDAHL, Harmut, 30167 Hannover (DE)
(74) Vertreter: Lauerwald, Jörg
(86) Internationale Anmeldenummer: PCT/EP2007/005945
(87) Internationale Veröffentlichungsnummer: WO 2008/025404

(56) Entgegenhaltungen:
- EP-A- 1 571 061
- DE-A1- 19 746 342
- DE-C1- 19 814 867

## Beschreibung

Die Erfindung betrifft eine elektropneumatische Bremssteuerungseinrichtung zur Steuerung einer Feststellbremse eines Fahrzeugs gemäß dem Oberbegriff des Patentanspruchs 1 sowie ein Verfahren zum Steuern einer derartigen Bremsanlage.

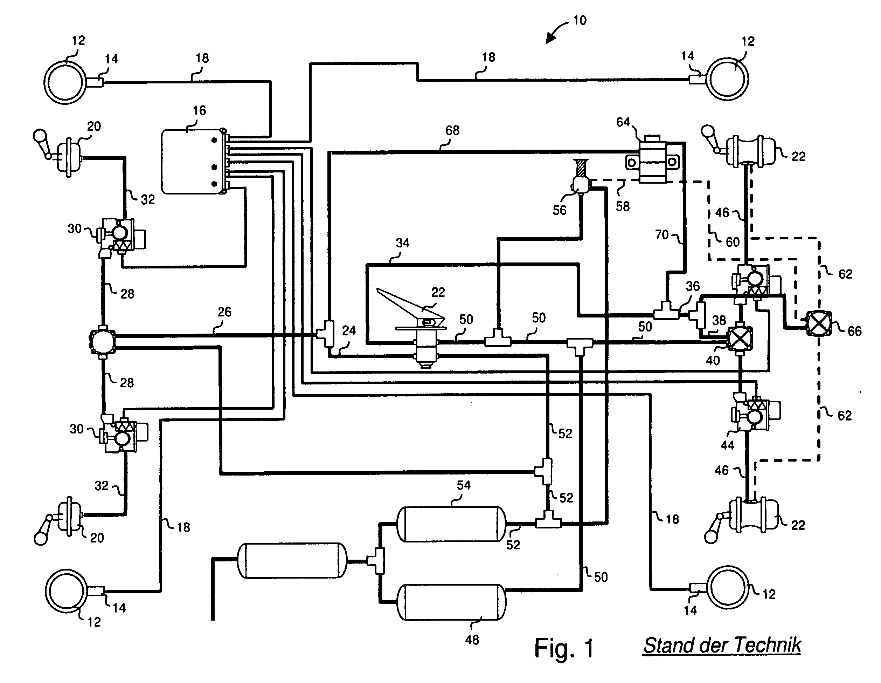

Eine bekannte gattungsgemäße Bremsanlage ist in Fig. 1 gezeigt. Die Bremsanlage 10 ist Teil eines Fahrzeugs mit vier Rädern 12, welche jeweils einen Radgeschwindigkeitssensor 14 aufweisen, der jeweils elektrisch mit einer Steuereinheit 16 über elektrische Leitungen 18 verbunden ist. Die Radbremsen weisen jeweils Bremszylinder 20, 22 auf, wobei die Bremszylinder 22 der Hinterachse als kombinierte Federspeicher-/Membranzylinder ausgebildet sind. Sie weisen daher einen Federspeicherteil und einen Membranteil auf. Der Federspeicherteil ist Bestandteil einer Feststellbremse. Der Membranteil ist Bestandteil der Betriebsbemse. DE 197 46 342 vom Anmelder beschreibt eine konventionelle Druckluftbremsanlage.

Die Betriebsbremse und die Feststellbremse werden pneumatisch betätigt. Ein Bremswunsch eines Fahrers wird mittels einer Bremsbetätigungseinrichtung 22 in einen ausgesteuerten Bremsdruck gewandelt. Dieser ausgesteuerte Bremsdruck wird über Druckluftleitungen 24, 26 und 28 Magnetventilen 30 eines Antiblockiersystems und über weitere Druckluftleitungen 32 den Bremszylindern 20 der Vorderachse zugeführt. In entsprechender Weise wird der ausgesteuerte Bremsdruck über Druckluftleitungen 34, 36, 38 über ein Relaisventil 40 weiter über Druckluftleitungen 42 zu Magnetventilen 44 des Antiblockiersystems weiter über Druckluftleitungen 46 zu den kombinierten Federspeicher-/Membranzylindern 22 der Hinterachse zugeführt.

Die Druckluftleitungen 34, 36, 38, 42 und 46 zu den kombinierten Federspeicher-/Membranzylindern 22 der Hinterachse bilden zusammen mit weiteren Komponenten, wie den Magnetventilen 44, dem Relaisventil 40, und einem Druckluftvorratsbehälter 48 einen ersten Bremskreis, sog. Bremskreis I, wobei der Druckluftvorratsbehälter 48 über weitere Druckluftleitungen 50 mit der Bremsbetätigungseinrichtung 22 sowie dem Relaisventil 40 pneumatisch verbunden ist. In entsprechender Weise bilden die Druckluftleitungen 24, 26, 28, 32 sowie die Magnetventile 30 zusammen mit den Bremszylindern 20 einen zweiten Bremskreis, sog. Bremskreis II, wobei die Bremsbetätigungseinrichtung 22 über weitere Druckluftleitungen 52 mit einem zweiten Druckluftvorratsbehälter 54 verbunden ist. Beide Druckluftvorratsbehälter 48, 54 werden von einem Kompressor mit Druckluft versorgt.

Die Feststellbremse kann mittels eines pneumatischen Schalters 56 betätigt werden. Mittels dieses Schalters 56 kann der Federspeicherteil der kombinierten Federspeicher-/Membranzylinder 22 entlüftet werden, wodurch die Feststellbremse eingelegt wird. Durch Belüften des Federspeicherteils wird die Feststellbremse wieder gelöst. Zu diesem Zweck kann Druckluft über Druckluftleitungen 58, 60, 62 zu den kombinierten Federspeicher-/Membranzylindern 22 zugeführt und von diesen wieder abgeführt werden. Die Druckluftsteuerung erfolgt dabei zum einen über den Schalter 56, zum anderen aber auch über ein invertierendes Relaisventil 64 sowie ein Ventil 66.

Das invertierende Relaisventil 64 übernimmt zugleich eine weitere Funktion. Es ist zu diesem Zweck mit dem ausgesteuerten Druck des Vorderachs-Bremskreises II über die Druckluftleitung 24, eine Druckluftleitung 68 sowie mit dem ausgesteuerten Druck des Hinterachs-Bremskreises I über die Druckluftleitung 34 und eine Druckluftleitung 70 verbunden.

Das invertierende Relaisventil 64 soll bei Ausfall des ersten Bremskreises, d.h. wenn eine Betriebsbremsung mittels des Bremskreises I nicht mehr möglich ist, die Feststellbremse, d.h. den Federspeicherteil der kombinierten Federspeicher-/Membranzylinder 22, aktivieren. Somit kann auch bei Ausfall des Hinterachs-Bremskreises I die Hinterachse mittels der Federspeicher eingebremst werden, um den erforderlichen Bremsweg erreichen zu können.

Bei Ausfall bzw. einem Druckabfall am Hinterachs-Bremskreis I liegt am invertierenden Relaisventil 64 ein hoher ausgesteuerter Druck des Vorderachs-Bremskreises II und ein niedriger bzw. kein Druck des Hinterachs-Bremskreises I an. Das invertierende Relaisventil ist dabei derart ausgebildet, dass es bei einem derartigen Druckunterschied der ausgesteuerten Drücke der beiden Bremskreise I und II den Ausgangsdruck am invertierenden Relaisventil 64, d.h. den Druck in der Druckluftleitung 60 absenkt. Dadurch werden die Federspeicher der Bremszylinder 22 der Hinterachse entlüftet, so dass die Feststellbremse die Funktion der Betriebsbremse unterstützen bzw. übernehmen kann. Somit kann auch bei Ausfall des Hinterachs-Bremskreises ein vorgeschriebener Bremsweg erreicht werden.

Der Erfindung liegt die Aufgabe zugrunde, derartige Bremsanlagen zu vereinfachen. Die Erfindung löst diese Aufgabe durch die im Patentanspruch 1 sowie im Patentanspruch 11 angegebenen Merkmale.

Erfindungsgemäß ist eine pneumatische Bremsanlage für ein Fahrzeug mit druckluftbetätigbaren Bremszylindern zum Betätigen von Radbremsen vorgesehen. Eine erste Gruppe von Radbremsen bildet zusammen mit weiteren Komponenten, wie Druckluftleitungen, Ventilen und einem ersten Druckluftvorratsbehälter zum Bereitstellen eines ersten Vorratsdruckes einen ersten Bremskreis. Eine zweite Gruppe von Radbremsen bildet zusammen mit weiteren Komponenten, wie Druckluftleitungen, Ventilen und einem zweiten Druckluftvorratsbehälter zum Bereitstellen eines zweiten Vorratsdruckes einen zweiten Bremskreis. Wenigstens ein Bremszylinder des ersten Bremskreises ist als kombinierter Federspeicher-/Membranzylinder mit einem Federspeicherteil zum Bereitstellen einer Feststellbremse und einem Membranteil zum Bereitstellen der Betriebsbremse ausgebildet. Bei Ausfall des ersten Bremskreises kann der Federspeicherteil entlüftet werden, um die Feststellbremse einzulegen. Erfindungsgemäß ist hierzu ein Drucksensor zum Messen des ersten Vorratsdruckes vorgesehen und mit einer elektrischen Steuereinheit verbunden. Diese elektrische Steuereinheit steuert einen Modulator zum Modulieren der Druckluft zum Federspeicherteil, so dass der Federspeicherteil be- und entlüftet werden kann. Die Steuereinheit erzeugt ein elektrisches Steuersignal für ein elektrisch betätigbares Magnetventil des Modulators, mittels dessen die Druckluftzufuhr bzw. -abfuhr zum Federspeicherteil mittelbar, d.h. unter Zwischenschaltung weiterer Einrichtungen, wie bspw. einer luftmengenverstärkenden Ventineinrichtung, oder unmittelbar gesteuert werden kann. Dieses Steuersignal wird erzeugt, wenn der vom ersten Drucksensor gemessene Wert unter einen vorbestimmten Mindestdruckwert abgefallen ist. In diesem Fall erkennt nämlich die Steuerungslogik, dass der erste Bremskreis ausgefallen ist. Die Steuerungslogik steuert dann das Magnetventil des Modulators derart an, dass der Federspeicherteil des Federspeicher-/Membranzylinders entlüftet wird, so dass die Feststellbremse dauerhaft oder kurzzeitig eingelegt wird.

Mittels des erfindungsgemäßen Drucksensors und der besonderen Ausbildung der Steuereinheit kann das im Stand der Technik verwendete invertierende Relaisventil entfallen. Die Bremsanlage kann somit ohne dieses Bauteil ausgebildet werden. Die Bremsanlage wird somit vom Aufbau einfacher und kostengünstiger.

Bei einer bevorzugten Ausführungsform ist ein zweiter Drucksensor zum Messen des mittels einer Bremsbetätigungseinrichtung ausgesteuerten Druckes des zweiten Bremskreises vorgesehen und mit der elektrischen Steuereinheit verbunden, wobei das Steuersignal für das Magnetventil in Abhängigkeit vom mittels des zweiten Drucksensors gemessenen Wertes erzeugbar ist. Durch das Messen des ausgesteuerten Druckes des zweiten Bremskreises und das Erzeugen des Steuersignals in Abhängigkeit von diesem gemessenen ausgesteuerten Druckwert kann die von dem Federspeicherteil ausgeübte Bremskraft von der Betätigung der Bremsbetätigungseinrichtung durch den Fahrer abhängig gemacht werden. Somit erfolgt auch bei Ausfall des ersten Bremskreises eine Bremsung der diesem Bremskreis angehörenden Räder mittels der Feststellbremse und zwar in einer vom Fahrer dosierbaren Weise, indem der entsprechende Bremsdruck abhängig vom Fahrerwunsch moduliert wird.

Bei einer weiteren bevorzugten Ausführungsform ist das Steuersignal für das Magnetventil in Abhängigkeit von einem einen Bremswunsch des Fahrers repräsentierenden Signal erzeugbar. Hierzu wird ein Bremswunsch des Fahrers erfasst und in ein Signal umgewandelt. Dieses Signal kann auf verschiedene Weisen erhalten werden. Vorteilhafterweise ist daher das den Bremswunsch repräsentierende Signal ein von einem elektronischen Bremssystem erzeugtes elektrisches analoges oder digitales Signal. Derartige Signale werden beispielsweise als digitale Botschaft, insbesondere SAE-Botschaft "break pedal position" mit beispielsweise einem Wertebereich von 0 bis 100, angegeben. Eine derartige Botschaft wird von der elektrischen Steuereinheit verarbeitet und welche sodann das Steuersignal für das Magnetventil zum Be- bzw. Entlüften des Federspeicherteils erzeugt.

Vorteilhafterweise wird das Steuersignal für dieses Magnetventil in Abhängigkeit von einem - mittels eines an einem Bremspedal angeordneten Wegsensors bereitgestellten - Bremsbetätigungssignal erzeugt. Dabei wird die Position des Bremspedals erfasst und auf diese Weise auf den Bremswunsch des Fahrers geschlossen. Das von diesem Sensor erzeugte Signal wird wiederum in der elektrischen Steuereinheit verarbeitet, um das Steuersignal für das Magnetventil bereitzustellen.

In einer weiteren bevorzugten Ausführungsform wird das Steuersignal für das Magnetventil in Abhängigkeit von einem elektrischen Signal erzeugt, das an ein elektrisch steuerbares Ventil zur Steuerung des Druckes im zweiten Bremskreis geführt wird. Bei diesem Ventil kann es sich bspw. um ein Proportional-Relaisventil handeln, welches mittels eines elektrischen Signals geöffnet bzw. geschlossen wird, um den Druck im zweiten Bremskreis anzusteuern. Auch dieses elektrische Signal repräsentiert wiederum einen Bremswunsch des Fahrers. Daher kann auch dieses Signal von der elektrischen Steuereinheit verwendet werden, um das Steuersignal für das Magnetventil bereitzustellen.

Bei einer weiteren bevorzugten Ausführungsform ist ein dritter Drucksensor zum Messen eines von dem Modulator dem Federspeicherteil zugeführten Druckes vorgesehen, wobei der dritte Drucksensor ebenfalls mit der elektrischen Steuereinheit verbunden ist. Nach dem Messen eines derartigen Druckwertes wird der gemessene Druckwert mit dem mittels des zweiten Drucksensors gemessenen ausgesteuerten Druckes des zweiten Bremskreises in Beziehung gesetzt bzw. beide gemessene Druckwerte miteinander verrechnet und das Steuersignal in Abhängigkeit des somit erhaltenen Ergebnisses geregelt. Auf diese Weise kann die mittels der Feststellbremse ausgeübte Bremskraft an den dem ersten Bremskreis zugeordneten Radbremsen an die Bremskraft der dem zweiten Bremskreis zugeordneten Radbremsen angepasst werden. Die Bremskraft des ersten Bremskreises kann dabei grundsätzlich höher, niedriger oder genauso hoch eingestellt werden wie die Bremskraft des zweiten Kreises. Diese Einstellung richtet sich nach der Fahrzeugkonstruktion und ggf. seinem Beladungszustand.

Bei einer weiteren bevorzugten Ausführungsform ist die Steuereinheit mit Radgeschwindigkeitssensoren und/oder einer Steuerung eines Antiblockiersystems verbunden, um auf diese Weise ein Blockieren der Räder des ersten Bremskreises erkennen zu können. Hierzu werden die Geschwindigkeiten der Räder des ersten Bremskreises gemessen. Wenn ein schlagartiger Abfall der Radgeschwindigkeit bzw. ein Stillstand der Räder des ersten Bremskreises erkannt wird, wird ein Blockieren der Räder bzw. eines der Räder erkannt. In diesem Fall entspricht die Geschwindigkeit des Rades nicht der Fahrzeuggeschwindigkeit. In einem derartigen Blockierfall erfolgt eine Belüftung des Federspeicherteils, in dem die Steuereinheit das Steuersignal an das Magnetventil derart verändert, dass der Federspeicherteil belüftet wird. Hierdurch wird die Feststellbremse gelöst. Wenn dann bei erneutem Messen der Geschwindigkeiten der Räder des ersten Bremskreises festgestellt wird, dass die Radgeschwindigkeiten der Fahrzeuggeschwindigkeit entsprechen, kann der Federspeicherteil wieder entlüftet und somit die Feststellbremse wieder eingelegt werden. Auf diese Weise ist ein Blockierschutz auch bei einer Bremsung mittels der Federspeicher realisierbar.

Weitere vorteilhafte Ausführungsformen ergeben sich aus den Unteransprüchen sowie aus den anhand der beigefügten Zeichnung näher erläuterten Ausführungsbeispiele. In der Zeichnung zeigt:
- Fig. 1: eine herkömmliche Bremsanlage gemäß dem Stand der Technik;
- Fig. 2: ein Ausführungsbeispiel einer erfindungsgemäßen Bremsanlage und
- Fig. 3: eine schematisierte Ansicht eines Teils der Bremsanlage gemäß Fig. 2.

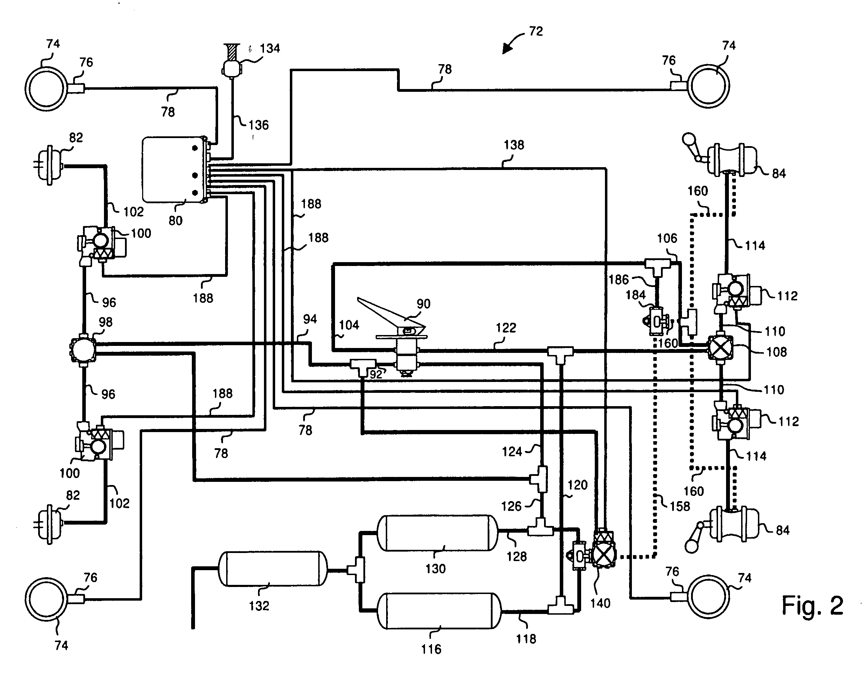

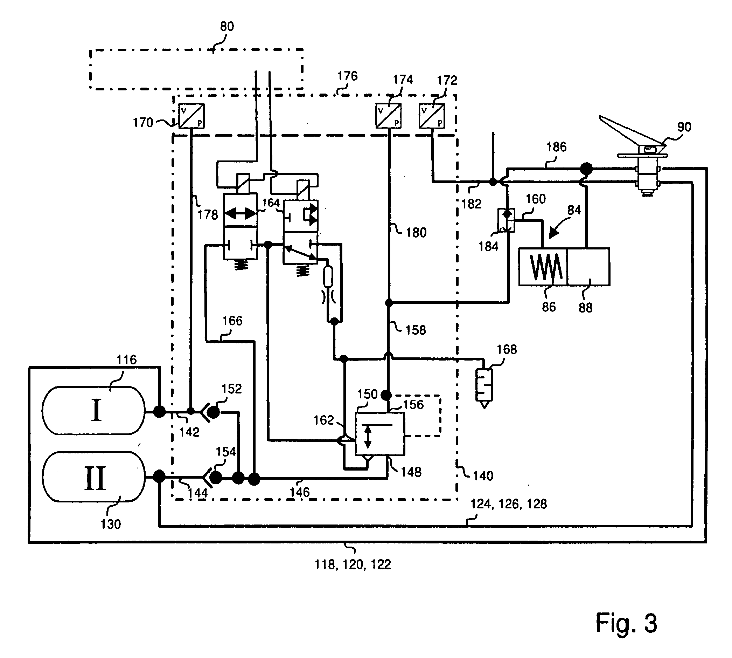

Fig. 2 zeigt eine erfindungsgemäße, bspw. in Nutzfahrzeugen, Lastkraftwagen, Bussen etc. zu implementierende Bremsanlage 72 eines Fahrzeugs mit mehreren Rädern, nämlich in dem gezeigten Beispiel mit vier Rädern 74, welche jeweils einen Radgeschwindigkeitssensor 76 aufweisen, der jeweils elektrisch über elektrische Leitungen 78 mit einer elektrischen Steuereinheit 80 verbunden ist. Die Räder 74 weisen jeweils Radbremsen mit Bremszylindern 82, 84 auf, wobei die Bremszylinder 84 einer Hinterachse zugeordnet und als kombinierte Federspeicher-/Membranzylinder ausgebildet sind. Diese Bremszylinder 84 weisen daher, wie in Fig. 3 gezeigt, jeweils einen Federspeicherteil 86 und einen Membranteil 88 auf. Der Federspeicherteil 86 ist Bestandteil einer Feststellbremse, während der Membranteil 88 Bestandteil der Betriebsbremse ist.

Sowohl die Betriebsbremse als auch die Feststellbremse werden bei dem erfindungsgemäßen Ausführungsbeispiel pneumatisch betätigt bzw. gelöst. Ein Bremswunsch eines Fahrers wird mittels eines Bremspedals einer Bremsbetätigungseinrichtung 90 in einen ausgesteuerten Bremsdruck gewandelt. Der ausgesteuerte Bremsdruck wird über Druckluftleitungen 92, 94, 96, vorzugsweise über ein Relaisventil 98, Magnetventilen 100 eines Antiblockiersystems und über weitere Druckluftleitungen 102 zu den Bremszylindern 82 einer Vorderachse zugeführt. In entsprechender Weise wird der ausgesteuerte Bremsdruck für die Hinterachse von der Bremsbetätigungseinrichtung 90 über weitere Druckluftleitungen 104, 106 über eine luftmengenverstärkende Ventileinheit bzw. ein Relaisventil 108 weiter über Druckluftleitungen 110 zu Magnetventilen 112 des Antiblockiersystems und dann weiter über Druckluftleitungen 114 zu den kombinierten Federspeicher-/Mambranzylindern 84 geführt.

Die Druckluftleitungen 104, 106, 110, 114 sowie die luftmengenverstärkende Ventileinrichtung 108 und die Magnetventile 112 bilden zusammen mit weiteren Komponenten, insbesondere einem Druckluftvorratsbehälter 116 und Druckluftleitungen 118, 120, 122 von diesem Druckluftvorratsbehälter 116 zu der Bremsbetätigungseinrichtung 90, einen ersten Bremskreis, den sog. Bremskreis I oder Hinterachs-Bremskreis. In entsprechender Weise bilden die Druckluftleitungen 92, 94, 96, 102 sowie ggf. das Relais-Ventil 98 und die Magnetventile 100 einen zweiten Bremskreis, den sog. Bremskreis II bzw. Vorderachs-Bremskreis, wobei die Bremsbetätigungseinrichtung 90 über weitere Druckluftleitungen 124, 126, 128 mit einem zweiten Druckluftvorratsbehälter 130 verbunden ist. Beide Druckluftvorratsbehälter 116, 130 werden von einem Kompressor bzw. einem gemeinsamen Druckluftvorrat 132 mit Druckluft versorgt.

Eine Feststellbremse wird unter anderem durch folgende Komponenten gebildet: Eine elektrische Betätigungseinrichtung 134, bspw. ein Schalter oder ein stufenlos arbeitendes Stellglied ist über eine elektrische Leitung 136 mit der elektrischen Steuereinheit 80 verbunden. Mittels dieser elektrischen Betätigungseinrichtung 134 kann die Feststellbremse betätigt werden. Sie kann folglich mittels dieser elektrischen Betätigungseinrichtung 134 eingelegt oder gelöst oder in einem teilweise eingelegten Zustand gehalten werden.

Die elektronische Steuereinheit 80 ist über weitere elektrische Leitungen 138 mit einem Modulator 140 zum Modulieren von Druckluft an den Federspeicherteil 86 (Fig. 3) der kombinierten Federspeicher-/Membranzylinder 84 verbunden.

Fig. 3 zeigt den Aufbau des Modulators 140. Der Modulator 140 ist mit dem ersten Druckluftvorratsbehälter 116 und dem zweiten Druckluftvorratsbehälter 130 verbunden. Von diesen Druckluftvorratsbehältern 116, 130 gelangt über Druckluftleitungen 142, 144, 146 Druckluft an den Einlass 148 einer luftmengenverstärkenden Ventileinrichtung 150, die bspw. als Relaisventil ausgebildet ist. Die luftmengenverstärkende Ventileinrichtung 150 ist jedoch mittels Rückschlagventilen 152, 154 vor einem Leck in den Druckluftvorratsbehältern 116, 130 bzw. in den Druckluftleitungen 142, 144 geschützt. Diese Rückschlagventile 152, 154 verhindern, dass Druckluft am Einlass 148 der luftmengenverstärkenden Ventileinrichtung 150 unkontrolliert entweichen kann, wenn es zu einer Beschädigung im Bereich der Druckluftvorratsbehälter 116, 130 bzw. deren Zuführung zum Modulator 140 gekommen sein sollte.

Ein Auslass 156 der luftmengenverstärkenden Ventileinrichtung 150 führt über Druckluftleitungen 158, 160 zu dem Federspeicherteil 86 des Federspeicher-/Membranzylinders 84.

Ein Steuereingang 162 der luftmengenverstärkenden Ventileinrichtung führt zu einem Magnetventil 164, das von der Steuereinheit 80 elektrisch betätigbar ist. Dieses Magnetventil ist über eine Druckluftleitung 166 mit der Druckluftleitung 146 und somit mit den Druckluftvorratsbehältern 116, 130 pneumatisch verbunden. Mittels dieses Magnetventils 164 kann Druckluft an den Steuereingang 162 der luftmengenverstärkenden Ventileinrichtung 150 dosiert zugeführt werden. Der zugeführte Druck ist dabei maximal so groß wie der von den Druckluftvorratsbehältern 116, 130 zur Verfügung gestellte Druck. Er kann aufgrund der besonderen Ausbildung des Magnetventils 164 jedoch auch einen niedrigeren Druck am Steuereingang 162 bereitstellen und insbesondere den Steuereingang 62 langsam oder schlagartig entlüften.

Der am Steuereingang 162 zur Verfügung gestellte Druck wird von der luftmengenverstärkenden Ventileinrichtung 150 an deren Auslass 156 nachgebildet. Dabei ist jedoch die von der luftmengenverstärkenden Ventileinrichtung 150 zur Verfügung gestellte Luftmenge mit entsprechendem Druck wesentlich größer als die am Steuereingang 162 bereitgestellte Luftmenge. Mittels des Magentventils 164 und der luftmengenverstärkenden Ventileinrichtung 150 kann eine große Luftmenge mit hohem Druck an den Federspeicherteil 86 der kombinierten Federspeicher-/Membranzylinder zur Verfügung gestellt werden, um die Speicherfeder zu spannen und somit die Feststellbremse zu lösen. Sofern der Druck am Auslass 156 der luftmengenverstärkenden Ventileinrichtung 150 abgesenkt wird, kann sich die Speicherfeder entspannen und somit die Feststellbremse einlegen.

Die luftmengenverstärkende Ventileinrichtung 150 ist zwecks Entlüftung mit einer Entlüftungseinrichtung 168 verbunden, über welche die Druckluft vom Federspeicherteil 86 über die Druckluftleitung 158, die luftmengenverstärkende Ventileinrichtung 150 in die Atmosphäre entweichen kann. Ferner ist das Magnetventil 164 ebenfalls mit der Entlüftungseinrichtung 168 verbunden, um den am Steuereingang 162 der luftmengenverstärkenden Ventileinrichtung 150 anliegenden Druck entweichen lassen zu können.

Der Modulator 140 weist ferner drei Drucksensoren 170, 172, 174 auf, die jeweils einen gemessenen Druck in ein elektrisches Signal wandeln und dieses jeweilige elektrische Signal der Steuereinheit 80 über elektrische Leitungen zuleiten. Diese Drucksensoren 170, 172, 174 sind vorzugsweise in einem Deckel 176 des Modulators 140 angeordnet und über pneumatische Leitungen 178, 180, 182 mit ihrer jeweiligen Messstelle verbunden.

Ein erster Drucksensor 170 misst den Druck des ersten Druckluftvorratsbehälters 116, jedoch innerhalb des Modulators 140. Er kann jedoch in einem anderen Ausführungsbeispiel auch außerhalb des Modulators 140 an anderer Stelle gemessen werden. Ein zweiter Drucksensor 172 misst den ausgesteuerten Druck für den zweiten Bremskreis bzw. Kreis II oder Vorderachs-Bremskreis. Ein dritter Drucksensor 174 misst den Druck am Auslass 156 der luftmengenverstärkenden Ventileinrichtung 150 und somit den Druck, welcher dem Federspeicherteil 86 des kombinierten Federspeicher-/Membranzylinders 84 zugeführt wird.

Im Falle eines Ausfalls des ersten Bremskreises (Kreis I bzw. Hinterachs-Bremskreis) fällt der vom ersten Drucksensor 170 gemessene Druck ab. Ein derartiger Ausfall kann durch Vergleich des vom ersten Drucksensor 170 gemessenen Wertes mit einem vorbestimmten Mindestdruckwert festgestellt werden. Wird ein solcher Ausfall festgestellt, erzeugt die Steuereinheit 80 ein Steuersignal für das Magnetventil 164, so dass das Magnetventil 164 den Steuereingang 162 der luftmengenverstärkenden Ventileinrichtung 150 entlüftet, so dass auch der Federspeicherteil 86 des kombinierten Federspeicher-/Membranzylinders 84 entlüftet wird. Somit fällt der Federspeicher ein, d.h. die Feststellbremse wird eingelegt und somit eine Bremswirkung an der entsprechenden Radbremse erzielt, obwohl der Betriebsbremskreis (Kreis I bzw. Hinterachs-Bremskreis) zu dieser Radbremse ausgefallen ist und somit der Membranteil 88 des kombinierten Federspeicher-/Membranzylinders 84 nicht mehr betätigbar ist.

Auf diese Weise kann automatisch auch die Feststellbremse des Fahrzeugs verwendet werden, um auch bei Ausfall eines Bremskreises der Betriebsbremse den vorgesehenen Bremsweg zu erreichen.

Das Steuersignal, welches dem Magnetventil 164 zugeführt wird, wird in Abhängigkeit des vom zweiten Drucksensor 172 gemessenen Druckwertes bestimmt. Der zweite Drucksensor 172 ermittelt nämlich einen Druckwert, welcher dem Bremswunsch des Fahrers entspricht, allerdings für den zweiten Bremskreis (Kreis II bzw. Vorderachs-Bremskreis). Dieser Bremskreis wird noch als intakt angenommen, so dass der von dem zweiten Drucksensor 172 bestimmte gemessene Druckwert als ein Wert verarbeitet wird, welcher dem Fahrerbremswunsch entspricht.

Ein hoher Druckwert des zweiten Drucksensors 172 bedeutet eine intensive Bremsung. Daher wird mittels des Magnetventil-Steuersignals das Magnetventil 164 derart gesteuert, dass eine schnelle Entlüftung am Steuereingang 162 der luftmengenverstärkenden Ventileinrichtung 150 und somit auch eine schnelle Entlüftung des Federspeicherteils 86 erfolgt. Auf diese Weise kann der Federspeicher schnell einfallen, wobei die Speicherfeder eine hohe Kraft auf die entsprechende Radbremse ausüben kann.

Wenn der Bremswunsch des Fahrers jedoch nur gering ist, d.h. der vom zweiten Drucksensor 172 gemessene Druckwert nur gering ist, wird das Steuersignal an das Magnetventil 164 entsprechend justiert, so dass der Druck am Steuereingang 162 der luftmengenverstärkenden Ventileinrichtung 150 nur geringfügig abgesenkt wird. Somit wird auch der Druck im Federspeicherteil 86 nur geringfügig reduziert. Auf diese Weise kommt es nur zu einer geringen Bremswirkung der Feststellbremse.

Sofern der Fahrer die Bremsbetätigungseinrichtung 90 nicht mehr betätigt, d.h. keinen Bremswunsch mehr äußert, regelt das Magnetventil 164 den Druck am Steuereingang 162 der luftmengenverstärkenden Ventileinrichtung 150 wieder auf einen hohen Wert ein, so dass auch der Federspeicherteil 86 wieder mit einem hohen Druck beaufschlagt wird. Auf diese Weise kann die Feststellbremse wieder gelöst werden.

Der zweite Drucksensor 172 ist zwar vorteilhafterweise im Modulator 140 bzw. in seinem Deckel 176 angeordnet. Alternativ kann er jedoch an jedweder anderen Position des zweiten Bremskreises, d.h. insbesondere auch außerhalb des Modulators 140 bzw. seines Deckels 176 angeordnet sein.

Anstelle oder zusätzlich zu einem Signal des zweiten Drucksensors 172 kann das Steuersignal für das Magnetventil 164 auch auf andere Weise erzeugt werden, bspw. in Abhängigkeit von einem Datensignal, das einen Bremswunsch des Fahrers repräsentiert. Ein derartiges Datensignal wird bspw. von einem elektronischen Bremssystem verwendet. Es handelt sich dabei regelmäßig um ein digitales Datensignal, das bspw. einen Wert zwischen 0 und 100% repräsentiert.

Ferner kann das Steuersignal für das Magnetventil 164 zusätzlich oder alternativ in Abhängigkeit von einem - mittels eines an der Bremsbetätigungseinrichtung 90 angeordneten Wegsensors erzeugbaren - Bremsbetätigungssignals erzeugt werden. Der Wegsensor erfasst dabei den Bremswunsch des Fahrers und wandelt diesen in ein elektrisches Signal um.

Ferner kann das Steuersignal für das Magnetventil 164 zusätzlich oder alternativ auch in Abhängigkeit von einem elektrischen Signal erzeugt werden, das an ein Proportional-Relaisventil zur Steuerung des Druckes im zweiten Bremskreis geführt wird. Bei diesem elektrischen Signal an dieses Proportional-Relaisventil kann es sich bspw. um den Betätigungsstrom oder die Betätigungsspannung zur Betätigung dieses Proportional-Relaisventils handeln.

Der Bremswunsch des Fahrers kann somit auf vielfältige Weisen ermittelt werden. Diese unterschiedlichen Arten der Ermittlung des Fahrerbremswunsches können entweder einzeln oder auch in jedweder Kombination von der Steuereinheit 80 ausgewertet und in ein Steuersignal für das Magnetventil 164 umgewandelt werden.

Mittels des dritten Drucksensors 174 kann der Druck am Auslass 156 der luftmengenverstärkenden Ventileinrichtung 150 bzw. der Druck im Federspeicherteil 86 des kombinierten Federspeicher-/Membranzylinders 84 überprüft werden. Stimmt der von dem dritten Drucksensor gemessene Druck nicht mit dem beabsichtigten Druckwert überein, kann das Steuersignal an das Magnetventil 164 entsprechend justiert werden. Auf diese Weise wird ein geschlossener Regelkreis zum Einstellen des gewünschten Druckes im Federspeicherteil 86 gebildet.

Die Fig. 2 und 3 zeigen ferner ein Überlastschutzventil bzw. Select-High-Ventil 184, welches zwischen den Auslass 156 der luftmengenverstärkenden Ventileinrichtung, eine den ausgesteuerten Druck führende Druckleitung 186 und die Druckleitung 160 zum Federspeicherbremszylinder geschaltet ist. Dieses Überlastschutzventil 184 wählt den höheren der beiden Drücke, nämlich des ausgesteuerten Bremsdrucks bzw. des von der luftmengenverstärkenden Ventileinrichtung zur Verfügung gestellten Drucks, aus und führt diesen dem Federspeicherteil 86 des kombinierten Federspeicher-/Membranzylinders 84 zu. Dieses Überlastschutzventil 184 verhindert eine Addition der von der Betriebsbremse, d.h. über den pneumatischen Teil bzw. Membranteil 88 zugeführten Bremskraft mit der von der Feststellbremse, d.h. dem Federspeicherteil 86 zugeführten Bremskraft, um auf diese Weise eine mechanische Überbeanspruchung der Bremsmechanik der diesem Bremszylinder zugeordneten Radbremse zu vermeiden. Die dem Bremszylinder über den Membranteil 88 zugeführte Bremskraft wird durch die dargestellte Konstruktion nicht um die von dem Federspeicherteil 86 ausgeübte Bremskraft erhöht, da im Falle einer Betätigung der Betriebsbremse die von der Speicherfeder ausgeübte Bremskraft um eine der Betätigung der Betriebsbremse entsprechende Kraft reduziert wird. Somit kann eine kritische Überbeanspruchung der entsprechenden Radbremse vermieden werden.

Wie bereits im Zusammenhang mit Fig. 2 erläutert, weist die Bremsanlage Magnetventile 100, 112 auf, die Komponenten eines Antiblockiersystems bilden. Dieses Antiblockiersystem wird ebenfalls durch die Steuereinheit 80 gesteuert. Detektiert einer der Radsensoren 86 ein Blockieren eines der Räder 74 sendet die Steuereinheit 80 ein elektrisches Signal über eine elektrische Leitung 188 an das entsprechende Magnetventil 100, 112, so dass ggf. der zugeführte Bremsdruck vermindert wird, um ein Blockieren des entsprechenden Rades 74 aufzuheben.

Sofern jedoch im Falle eines Ausfalls des ersten Bremskreises die Feststellbremse zur Unterstützung der Betriebsbremse verwendet wird, ist erfindungsgemäß gleichwohl ein Blockierschutz der entsprechenden Achsräder gewährleistet. Zu diesem Zweck werden die von den Geschwindigkeitssensoren 76 gemessenen Geschwindigkeitswerte der Räder 74 in der Steuereinheit 80 ausgewertet. Wenn sich anhand der gemessenen Radgeschwindigkeiten ergibt, dass ein Rad des ersten Bremskreises blockiert, wird der Federspeicherteil 86 belüftet, um die Feststellbremse zu lösen. Sobald anhand der gemessenen Radgeschwindigkeit festgestellt wird, dass das Rad wieder mit der der Fahrzeuggeschwindigkeit entsprechenden Geschwindigkeit dreht, kann der Federspeicherteil 86 wieder entlüftet werden, um die Feststellbremsfunktion zu betätigen.

Auf diese Weise kann ein wirksamer Blockierschutz auch bei Verwendung der Federspeicherbremsen anstelle der Betriebsbremse realisiert werden.

Dank der Erfindung kann eine vereinfachte Bremsanlage bereitgestellt werden, die ohne ein invertierendes Relaisventil auskommt, aber gleichwohl bei Ausfall des ersten Bremskreises mittels der Feststellbremsfunktion eine ausreichende Bremswirkung an den Radbremsen dieses Bremskreises bereitstellt. Des Weiteren kann auch aufgrund der eingesetzten elektrischen Steuerungskomponenten ein Blockierschutz selbst bei einer Bremsung mittels der Feststellbremsfunktion erreicht werden.

### Bezugszeichenliste

- 10: Bremsanlage
- 12: Rad
- 14: Radgeschwindigkeitssensor
- 16: Steuereinheit
- 18: elektrische Leitung
- 20: Bremszylinder
- 22: Bremsbetätigungseinrichtung
- 24: Druckluftleitung
- 26: Druckluftleitung
- 28: Druckluftleitung
- 30: Magnetventil
- 32: Druckluftleitung
- 34: Druckluftleitung
- 36: Druckluftleitung
- 38: Druckluftleitung
- 40: Relaisventil
- 42: Druckluftleitung
- 44: Magnetventil
- 46: Druckluftleitung
- 48: Druckluftvorratsbehälter
- 50: Druckluftleitung
- 52: Druckluftleitung
- 54: Druckluftvorratsbehälter
- 56: pneumatischer Schalter
- 58: Druckluftleitung
- 60: Druckluftleitung
- 62: Druckluftleitung
- 64: invertierendes Relaisventil
- 66: Ventil
- 68: Druckluftleitung
- 70: Druckluftleitung
- 72: Bremsanlage
- 74: Rad
- 76: Radgeschwindigkeitssensor
- 78: elektrische Leitung
- 80: Steuereinheit
- 82: Bremszylinder
- 84: Bremszylinder
- 86: Federspeicherteil
- 88: Membranteil
- 90: Bremsbetätigungseinrichtung
- 92: Druckluftleitung
- 94: Druckluftleitung
- 96: Druckluftleitung
- 98: Ventil
- 100: Magnetventil
- 102: Druckluftleitung
- 104: Druckluftleitung
- 106: Druckluftleitung
- 108: luftmengenverstärkende Ventileinrichtung
- 110: Druckluftleitung
- 112: Magnetventil
- 114: Druckluftleitung
- 116: erster Druckluftvorratsbehälter
- 118: Druckluftleitung
- 120: Druckluftleitung
- 122: Druckluftleitung
- 124: Druckluftleitung
- 126: Druckluftleitung
- 128: Druckluftleitung
- 130: zweiter Druckluftvorratsbehälter
- 132: gemeinsamer Druckluftvorrat
- 134: elektrische Betätigungseinrichtung
- 136: elektrische Leitung
- 138: elektrische Leitung
- 140: Modulator
- 142: Druckluftleitung
- 144: Druckluftleitung
- 146: Druckluftleitung
- 148: Einlass
- 150: luftmengenverstärkende Ventileinrichtung
- 152: Rückschlagventil
- 154: Rückschlagventil
- 156: Auslass
- 158: Druckluftleitung
- 160: Druckluftleitung
- 162: Steuereingang
- 164: Magnetventil
- 166: Druckluftleitung
- 168: Entlüftungseinrichtung
- 170: erster Drucksensor
- 172: zweiter Drucksensor
- 174: dritter Drucksensor
- 176: Deckel
- 178: pneumatische Leitung
- 180: pneumatische Leitung
- 182: pneumatische Leitung
- 184: Überlastschutzventil bzw. Select-High-Ventil
- 186: Druckluftleitung
- 188: elektrische Leitung

## Patentansprüche

1. Pneumatische Bremsanlage für ein Fahrzeug mit druckluftbetätigbaren Bremszylindern (82, 84) zum Betätigen von Radbremsen, wobei eine erste Gruppe von Radbremsen einem ersten Bremskreis (116, 118, 120, 122, 104, 106, 108, 110, 112, 114, 84) mit einem ersten Druckluftvorratsbehälter (116) zum Bereitstellen eines ersten Vorratsdruckes und eine zweite Gruppe von Radbremsen einem zweiten Bremskreis (130, 128, 126, 124, 92, 94, 98, 96, 100, 102, 82) mit einem zweiten Druckluftvorratsbehälter (130) zum Bereitstellen eines zweiten Vorratsdruckes angehört, wobei wenigstens ein Bremszylinder des ersten Bremskreises als kombinierter Federspeicher-/Membranzylinder (84) mit einem Federspeicherteil (86) zum Bereitstellen einer Feststellbremse und einem Membranteil (88) zum Bereitstellen einer Betriebsbremse ausgebildet ist, wobei bei einem Ausfall des ersten Bremskreises der Federspeicherteil (86) entlüftbar ist, um die Feststellbremse einzulegen, **dadurch gekennzeichnet, dass** ein erster Drucksensor (170) zum Messen des ersten Vorratsdruckes vorgesehen und mit einer elektrischen Steuereinheit (80) verbunden ist, mittels der ein Modulator (140) zum Be- und Entlüften des Federspeicherteils (86) steuerbar ist, wobei die Steuereinheit (80) zum Erzeugen eines elektrischen Steuersignals für ein elektrisch betätigbares Magnetventil (164) des Modulators (140) ausgebildet ist, wenn der vom ersten Drucksensor (170) gemessene Wert unter einen vorbestimmten Mindestdruckwert abfällt, wobei mittels des Magnetventils (164) der Federspeicherteil (86) mittelbar oder unmittelbar be- und entlüftbar ist.

2. Bremsanlage nach Anspruch 1, **dadurch gekennzeichnet, dass** ein zweiter Drucksensor (172) zum Messen des mittels einer Bremsbetätigungseinrichtung (90) ausgesteuerten Druckes des zweiten Bremskreises (130, 128, 126, 124, 92, 94, 98, 96, 100, 102, 82) vorgesehen und mit der elektrischen Steuereinheit (80) verbunden ist, wobei das Steuersignal für das Magnetventil (164) in Abhängigkeit vom mittels des zweiten Drucksensors (172) gemessenen Wertes erzeugbar ist.

3. Bremsanlage nach Anspruch 1 oder 2, **dadurch gekennzeichnet, dass** das Steuersignal für das Magnetventil (164) in Abhängigkeit von einem einen Bremswunsch repräsentierenden Signal erzeugbar ist.

4. Bremsanlage nach Anspruch 3, **dadurch gekennzeichnet, dass** das den Bremswunsch repräsentierende Signal ein von einem elektronischen Bremssystem erzeugtes Signal ist.

5. Bremsanlage nach einem der vorhergehenden Ansprüche, **dadurch gekennzeichnet, dass** das Steuersignal für das Magnetventil (164) in Abhängigkeit von einem mittels eines an einem Bremspedal angeordneten Wegsensors erzeugbaren Bremsbetätigungssignal erzeugbar ist.

6. Bremsanlage nach einem der vorhergehenden Ansprüche, **dadurch gekennzeichnet, dass** das Steuersignal für das Magnetventil (164) in Abhängigkeit von einem an ein elektrisch steuerbares Ventil zur Steuerung des Druckes im zweiten Bremskreis (130, 128, 126, 124, 92, 94, 98, 96, 100, 102, 82) geführtes elektrisches Signal erzeugbar ist.

7. Bremsanlage nach einem der vorhergehenden Ansprüche, **dadurch gekennzeichnet, dass** ein dritter Drucksensor (174) zum Messen eines von dem Modulator (140) dem Federspeicherteil (86) bereitgestellten Druckes, wobei der dritte Drucksensor (174) ebenfalls mit der elektrischen Steuereinheit (80) verbunden ist.

8. Bremsanlage nach Anspruch 7, **dadurch gekennzeichnet, dass** mittels der Steuereinheit (80) das Steuersignal auch in Abhängigkeit von dem mittels des dritten Drucksensors (174) gemessenen Wertes erzeugbar ist.

9. Bremsanlage nach einem der vorhergehenden Ansprüche, **dadurch gekennzeichnet, dass** die Steuereinheit (80) mit Radgeschwindigkeitssensoren (76) und/oder einer Steuerung eines Antiblockiersystems derart verbunden ist, dass ein Blockieren von Rädern (74) des ersten Bremskreises (116, 118, 120, 122, 104, 106, 108, 110, 112, 114, 84) erkennbar ist, wobei die Steuereinheit (80) derart ausgelegt ist, dass bei erkanntem Blockieren von Rädern des ersten Bremskreises das Steuersignal derart veränderbar ist, dass der Federspeicherteil (86) belüftbar ist, um die Feststellbremse zu lösen.

10. Bremsanlage nach einem der vorhergehenden Ansprüche, **dadurch gekennzeichnet, dass** der Modulator (140) eine luftmengenverstärkende Ventileinrichtung (150) aufweist, deren Steuereingang (162) mit einem Ausgang des Magnetventils (164), deren Einlass (148) mit dem ersten (116), zweiten (130) und/oder einem dritten Druckluftvorratsbehälter und deren Auslass (156) mit dem Federspeicherteil (86) verbunden ist und die eine Entlüftungseinrichtung (168) aufweist.

11. Verfahren zum Steuern einer Bremsanlage nach einem der Ansprüche 1 bis 10, mit folgenden Schritten:
a) Messen des ersten Vorratsdruckes,
b) Vergleichen des gemessenen Vorratsdruckes mit dem vorbestimmten Mindestdruckwert,
c) Erzeugen eines elektrischen Steuersignals zum Steuern eines Magnetventils (164), wenn der Vergleich ergibt, dass der gemessene Vorratsdruckwert niedriger ist als der vorbestimmte Mindestdruckwert, wobei das Steuersignal das Magnetventil (164) derart steuert, dass der Federspeicherteil (86) des kombinierten Federspeicher-/Membranzylinders (84) entlüftet und **dadurch** die Feststellbremse eingelegt wird.

12. Verfahren nach Anspruch 11, mit folgenden weiteren Schritten:
a) Messen des ausgesteuerten Druckes des zweiten Bremskreises (130, 128, 126, 124, 92, 94, 98, 96, 100, 102, 82) und
b) Erzeugen des Steuersignals in Abhängigkeit vom gemessenen ausgesteuerten Druckwert, so dass die von dem Federspeicherteil (86) ausgeübte Bremskraft abhängig ist von der Betätigung der Bremsbetätigungseinrichtung (90).

13. Verfahren nach Anspruch 12, mit folgenden weiteren Schritten:
a) Messen des vom Modulator (140) dem Federspeicherteil (86) zugeführten Druckes,
b) Vergleichen dieses gemessenen Druckes mit dem gemessenen ausgesteuerten Druckwert und
c) Justieren des erzeugten Steuersignals, wenn der Vergleich eine Abweichung größer als einen vorgegebenen Differenzwert ergibt.

14. Verfahren nach einem der Ansprüche 11 bis 13, mit folgenden weiteren Schritten:
a) Messen der Geschwindigkeiten der Räder (74) des ersten Bremskreises (116, 118, 120, 122, 104, 106, 108, 110, 112, 114, 84),
b) Belüften des Federspeicherteils, wenn sich aus den gemessenen Radgeschwindigkeiten ergibt, dass ein Rad (74) blockiert, und Entlüften des Federspeicherteils (86), wenn sich aus der gemessenen Radgeschwindigkeit ergibt, dass das blockierte Rad wieder eine der Fahrzeuggeschwindigkeit entsprechende Geschwindigkeit aufweist.

## Claims

1. Pneumatic brake system for a vehicle having brake cylinders (82, 84), which can be actuated using compressed air, for actuating wheel brakes, a first group of wheel brakes being associated with a first brake circuit (116, 118, 120, 122, 104, 106, 108, 110, 112, 114, 84) having a first compressed air supply container (116) for providing a first supply pressure and a second group of wheel brakes being associated with a second brake circuit (130, 128, 126, 124, 92, 94, 98, 96, 100, 102, 82) having a second compressed air supply container (130) for providing a second supply pressure, at least one brake cylinder of the first brake circuit being implemented as a combined spring-type actuator/diaphragm cylinder (84) having a spring-type actuator part (86) for providing a parking brake and a diaphragm part (88) for providing an operating brake, the spring-type actuator part (86) being able to be deaerated in the event of a failure of the first brake circuit in order to engage the parking brake, **characterized in that** a first pressure sensor (170) is provided for measuring the first supply pressure and is connected to an electrical control unit (80), using which a modulator (140) for aerating and deaerating the spring-type actuator part (86) is controllable, the control unit (80) being implemented for generating an electrical control signal for a solenoid valve (164), which can be electrically actuated, of the modulator (140) if the value measured by the first pressure sensor (170) drops below a predetermined minimum pressure value, the spring-type actuator part (86) being able to be aerated and deaerated indirectly or directly using the solenoid valve (164).

2. Brake system according to Claim 1, **characterized in that** a second pressure sensor (172) is provided for measuring the pressure of the second brake circuit (130, 128, 126, 124, 92, 94, 98, 96, 100, 102, 82), which is modulated using a brake actuation apparatus (90), and is connected to the electrical control unit (80), the control unit for the solenoid valve (164) being able to be generated as a function of the value measured using the second pressure sensor (172).

3. Brake system according to Claim 1 or 2, **characterized in that** the control signal for the solenoid valve (164) can be generated as a function of a signal representing a brake command.

4. Brake system according to Claim 3, **characterized in that** the signal which represents the brake command is a signal which is generated by an electronic braking system.

5. Brake system according to one of the preceding claims, **characterized in that** the control signal for the solenoid valve (164) can be generated as a function of a brake actuation signal, which can be generated using a travel sensor situated on a brake pedal.

6. Brake system according to one of the preceding claims, **characterized in that** the control signal for the solenoid valve (164) can be generated as a function of an electrical signal fed to an electrically controllable valve for controlling the pressure in the second brake circuit (130, 128, 126, 124, 92, 94, 98, 96, 100, 102, 82).

7. Brake system according to one of the preceding claims, **characterized in that** a third pressure sensor (174) is provided for measuring a pressure provided by the modulator (140) to the spring-type actuator part (86), the third pressure sensor (174) also being connected to the electrical control unit (80).

8. Brake system according to Claim 7, **characterized in that**, using the control unit (80), the control signal can also be generated as a function of the value measured using the third pressure sensor (174).

9. Brake system according to one of the preceding claims, **characterized in that** the control unit (80) is connected to wheel velocity sensors (76) and/or a controller of an antilock braking system in such a manner that locking of wheels (74) of the first brake circuit (116, 118, 120, 122, 104, 106, 108, 110, 112, 114, 84) is recognizable, the control unit (80) being designed in such a manner that in the case of recognized locking of wheels of the first brake circuit, the control signal is changeable in such a manner that the spring-type actuator part (86) can be aerated in order to disengage the parking brake.

10. Brake system according to one of the preceding claims, **characterized in that** the modulator (140) has an air-quantity-boosting valve apparatus (150), whose control input (162) is connected to an output of the solenoid valve (164), whose intake (148) is connected to the first (116), second (130), and/or a third compressed air supply container, and whose outlet (156) is connected to the spring-type actuator part (86) and which has a deaerating apparatus (168).

11. Method for controlling a brake system according to one of Claims 1 to 10, having the following steps:
a) measuring the first supply pressure,
b) comparing the measured supply pressure to the predetermined minimum pressure value,
c) generating an electrical control signal for controlling a solenoid valve (164) if the comparison has the result that the measured supply pressure value is lower than the predetermined minimum pressure value, the control signal controlling the solenoid valve (164) in such a manner that the spring-type actuator part (86) of the combined spring-type actuator/diaphragm cylinder (84) is deaerated and the parking brake is thus engaged.

12. Method according to Claim 11, having the following further steps:
a) measuring the modulated pressure of the second brake circuit (130, 128, 126, 124, 92, 94, 98, 96, 100, 102, 82) and
b) generating the control signal as a function of the measured modulated pressure value, so that the brake force exerted by the spring-type actuator part (86) is a function of the actuation of the brake actuation apparatus (90).

13. Method according to Claim 12, having the following further steps:
a) measuring the pressure supplied from the modulator (140) to the spring-type actuator part (86),
b) comparing this measured pressure to the measured modulated pressure value, and
c) adjusting the generated control signal if the comparison has the result of a deviation greater than a predefined differential value.

14. Method according to one of Claims 11 to 13, having the following further steps:
a) measuring the velocities of the wheels (74) of the first brake circuit (116, 118, 120, 122, 104, 106, 108, 110, 112, 114, 84),
b) aerating the spring-type actuator part if the measured wheel velocities have the result that one wheel (74) is locked, and deaerating the spring-type actuator part (86) if the measured wheel velocity has the result that the locked wheel again has a velocity corresponding to the vehicle velocity.

## Revendications

1. Système de freinage pneumatique pour un véhicule avec des cylindres de frein (82, 84) à commande par air sous pression pour l'actionnement de freins de roues, un premier groupe de freins de roues appartenant à un premier circuit de freinage (116, 118, 120, 122, 104, 106, 108, 110, 112, 114, 84) comprenant un premier réservoir d'air sous pression (116) destiné à fournir une première pression de réserve, et un deuxième groupe de freins de roues appartenant à un deuxième circuit de freinage (130, 128, 126, 124, 92, 94, 98, 96, 100, 102, 82) comprenant un deuxième réservoir d'air sous pression (130) destiné à fournir une deuxième pression de réserve, au moins un cylindre de frein du premier circuit de freinage étant réalisé sous forme de cylindre d'accumulateur à ressort / cylindre à membrane (84) avec une partie d'accumulateur à ressort (86) pour fournir un frein de stationnement et avec une partie de membrane (88) pour fournir un frein de service, la partie d'accumulateur à ressort (86) pouvant être désaérée dans le cas d'une panne du premier circuit de freinage, afin d'enclencher le frein de stationnement, **caractérisé en ce qu'**un premier capteur de pression (170) est prévu pour mesurer la première pression de réserve, et est connecté à une unité de commande électronique (80), au moyen de laquelle un modulateur (140) pour la ventilation et le désaérage de la partie d'accumulateur à ressort (86) peut être commandé, l'unité de commande (80) étant réalisée pour produire un signal de commande électronique pour une électrovanne à commande électronique (164) du modulateur (140), quand la valeur mesurée par le premier capteur de pression (170) tombe en dessous d'une valeur de pression minimale prédéterminée, la partie d'accumulateur à ressort (86) pouvant être ventilée ou désaérée directement ou de manière indirecte au moyen de l'électrovanne (164).

2. Système de freinage selon la revendication 1, **caractérisé en ce qu'**un deuxième capteur de pression (172) est prévu pour mesurer la pression du deuxième circuit de freinage (130, 128, 126, 124, 92, 94, 98, 96, 100, 102, 82) commandée au moyen d'un dispositif d'actionnement des freins (90), et est connecté à l'unité de commande électronique (80), le signal de commande pour l'électrovanne (164) pouvant être produit en fonction d'une valeur mesurée au moyen du deuxième capteur de pression (172).

3. Système de freinage selon la revendication 1 ou 2, **caractérisé en ce que** le signal de commande pour l'électrovanne (164) peut être produit en fonction d'un signal représentant un souhait de freinage.

4. Système de freinage selon la revendication 3, **caractérisé en ce que** le signal représentant un souhait de freinage est un signal produit par un système de freinage électronique.

5. Système de freinage selon l'une quelconque des revendications précédentes, **caractérisé en ce que** le signal de commande pour l'électrovanne (164) peut être produit en fonction d'un signal d'actionnement des freins pouvant être produit au moyen d'un capteur de position disposé sur une pédale de frein.

6. Système de freinage selon l'une quelconque des revendications précédentes, **caractérisé en ce que** le signal de commande pour l'électrovanne (164) peut être produit en fonction d'un signal électrique acheminé au niveau d'une soupape à commande électrique pour commander la pression dans le deuxième circuit de freinage (130, 128, 126, 124, 92, 94, 98, 96, 100, 102, 82).

7. Système de freinage selon l'une quelconque des revendications précédentes, **caractérisé en ce qu'**un troisième capteur de pression (174) est prévu pour mesurer une pression fournie par le modulateur (140) à la partie d'accumulateur à ressort (86), le troisième capteur de pression (174) étant également connecté à l'unité de commande électrique (80).

8. Système de freinage selon la revendication 7, **caractérisé en ce que** le signal de commande peut être produit au moyen de l'unité de commande (80) également en fonction de la valeur mesurée au moyen du troisième capteur de pression (174).

9. Système de freinage selon l'une quelconque des revendications précédentes, **caractérisé en ce que** l'unité de commande (80) est connectée à des capteurs de vitesse de roue (76) et/ou à une commande d'un système d'antiblocage, de telle sorte qu'un blocage des roues (74) du premier circuit de freinage (116, 118, 120, 122, 104, 106, 108, 110, 112, 114, 84) puisse être détecté, l'unité de commande (80) étant conçue de telle sorte que lorsqu'un blocage des roues du premier circuit de freinage est détecté, le signal de commande puisse être modifié de telle sorte que la partie d'accumulateur à ressort (86) puisse être ventilée afin de desserrer le frein de stationnement.

10. Système de freinage selon l'une quelconque des revendications précédentes, **caractérisé en ce que** le modulateur (140) présente un dispositif de soupape augmentant la quantité d'air (150), dont l'entrée de commande (162) est connectée à une sortie de l'électrovanne (164), dont l'entrée (148) est connectée au premier (116), deuxième (130) et/ou à un troisième réservoir d'air sous pression et dont la sortie (156) est connectée à la partie d'accumulateur à ressort (86) et qui présente un dispositif de désaérage (168).

11. Procédé de commande d'un système de freinage selon l'une quelconque des revendications 1 à 10, comprenant les étapes suivantes :
a) mesure de la première pression de réserve,
b) comparaison de la pression de réserve mesurée à la valeur de pression minimale prédéterminée,
c) production d'un signal de commande électrique pour commander une électrovanne (164), lorsque la comparaison indique que la valeur de pression de réserve mesurée est inférieure à la valeur de pression minimale prédéterminée, le signal de commande commandant l'électrovanne (164) de telle sorte que la partie d'accumulateur à ressort (86) de la combinaison du cylindre d'accumulateur à ressort et du cylindre à membrane (84) soit désaérée et de ce fait que le frein de stationnement soit enclenché.

12. Procédé selon la revendication 11, comprenant les étapes supplémentaires suivantes :
a) mesure de la pression commandée du deuxième circuit de freinage (130, 128, 126, 124, 92, 94, 98, 96, 100, 102, 82) et
b) production du signal de commande en fonction de la valeur de pression commandée mesurée, de sorte que la force de freinage exercée par la partie d'accumulateur à ressort (86) dépende de l'actionnement du dispositif d'actionnement des freins (90).

13. Procédé selon la revendication 12, comprenant les autres étapes suivantes :
a) mesure de la pression acheminée par le modulateur (140) à la partie d'accumulateur à ressort (86),
b) comparaison de cette pression mesurée avec la valeur de pression commandée mesurée et
c) ajustement du signal de commande produit, quand la comparaison indique un écart supérieur à une valeur de différence prédéfinie.

14. Procédé selon l'une quelconque des revendications 11 à 13, comprenant les étapes supplémentaires suivantes :
a) mesure des vitesses des roues (74) du premier circuit de freinage (116, 118, 120, 122, 104, 106, 108, 110, 112, 114, 84),
b) ventilation de la partie d'accumulateur à ressort, lorsqu'il ressort des vitesses de roues mesurées qu'une roue (74) est bloquée, et désaérage de la partie d'accumulateur à ressort (86), lorsqu'il ressort de la vitesse de roue mesurée, que la roue bloquée présente à nouveau une vitesse correspondant à la vitesse du véhicule.
